# EUROPEAN PATENT APPLICATION

(11) **EP 4 546 103 A1**
(43) Date of publication of application: **30.04.2025**
(21) Application number: 24208385.5
(22) Date of filing: 23.10.2024
(51) Int. Cl.: G06F 3/04847, G06F 3/0486, G06F 3/04883

(54) **OPERATION METHOD, RECORDING MEDIUM, AND TERMINAL**

(30) Priority: 24.10.2023 JP 2023182443
(71) Applicant: Panasonic Intellectual Property Management Co., Ltd., Kadoma-shi, Osaka 571-0057 (JP)
(72) Inventor: TAKAHASHI, Takeshi, Kadoma-shi, Osaka, 571-0057 (JP); OKAMOTO, Naoko, Kadoma-shi, Osaka, 571-0057 (JP)
(74) Representative: Eisenführ Speiser

(57) **Abstract**

A terminal receives a slide operation of an image displayed on a display from a first position to a second position and when a finger is held in the second position without being released from the display for a certain period of time, receives an operation for a specific process.

## Description

### Technical Field

The present disclosure relates to an operation method, a recording medium, and a terminal.

### Background Art

In a terminal such as a smartphone, two operations may be required in a user interface (UI) in order to prevent an erroneous operation that would be caused by a user.

For example, the terminal displays a button image for switching a certain function on the display. When the button image for switching a certain function is tapped (first operation), for example, the terminal displays an image for confirming whether to switch a certain function, the image including the text indicating "Do you want to switch?", and a button image including the texts such as "Yes" and "No" for receiving the confirmation.

When a button image including the text such as "Yes" is tapped (second operation), the terminal executes switching of a certain function. When a button image including the text such as "No" is tapped (second operation), the terminal does not execute the switching of the certain function.

As described above, the terminal prevents an erroneous operation by causing a user to perform two operations.

### Citation List

### Patent Literature

PTL 1
Japanese Patent Application Laid-Open No. 2021-190058

### Summary of Invention

### Technical Problem

In a case where a user wants to operate the terminal quickly, the user may find the display and operation of a guidance image for operation confirmation to be bothersome.

For example, as described above, when a confirmation screen with the text "Do you want to switch?" is displayed on the display, the user may find the operation of tapping the button image to be bothersome.

A non-limiting embodiment of the present disclosure contributes to providing an operation method, a program, and a terminal that prevents an erroneous operation and makes a user feel less bothered by the operation.

### Solution to Problem

An operation method according to an embodiment of the present disclosure includes: receiving, by a terminal, a slide operation of an image displayed on a display from a first position to a second position; and receiving, by the terminal, an operation for a specific process when a finger is held in the second position without being released from the display for a certain period of time.

A recording medium according to an embodiment of the present disclosure is a recording medium storing thereon a program for causing a terminal to execute processing, the processing includes: receiving a slide operation of an image displayed on a display from a first position to a second position; and receiving an operation for a specific process when a finger is held in the second position without being released from the display for a certain period of time.

A terminal according to an embodiment of the present disclosure includes: a slide operation receiver that receives a slide operation of an image displayed on a display from a first position to a second position; and a hold operation receiver that receives an operation for a specific process when a finger is held in the second position without being released from the display for a certain period of time.

It should be noted that general or specific embodiments may be implemented as a system, an apparatus, a method, an integrated circuit, a computer program, a recording medium, or any selective combination thereof.

### Advantageous Effects of Invention

An embodiment of the present disclosure can prevent an erroneous operation and make a user feel less bothered by the operation.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates a system configuration example including a terminal according to Embodiment 1;
FIG. 2 illustrates Example 1 of two operations;
FIG. 3 illustrates Example 2 of the two operations;
FIG. 4 is a diagram for describing Operation 1;
FIG. 5 is a diagram for describing Operation 1;
FIG. 6 is a diagram for describing Operation 2;
FIG. 7 is a diagram for describing Operation 3;
FIG. 8 is a diagram for describing Operation 4;
FIG. 9 illustrates a block configuration example of a terminal; and
FIG. 10 is a flowchart illustrating an operation example in a slide and hold operation of the terminal.

### Description of Embodiments

Embodiments of the present invention will be described below in detail with reference to the accompanying drawings as appropriate. It is, however, noted that a description made in detail more than necessary is omitted in some cases. For example, a detailed description of an already well-known item and a duplicate description of substantially the same configuration are omitted in some cases. The reason for this is to prevent the following description from being unnecessarily redundant and allow a person skilled in the art to readily understand the present disclosure.

The accompanying drawings and the following descriptions are provided to allow a person skilled in the art to fully understand the present disclosure and are not intended to limit the subject set forth in the appended claims.

### <System Configuration>

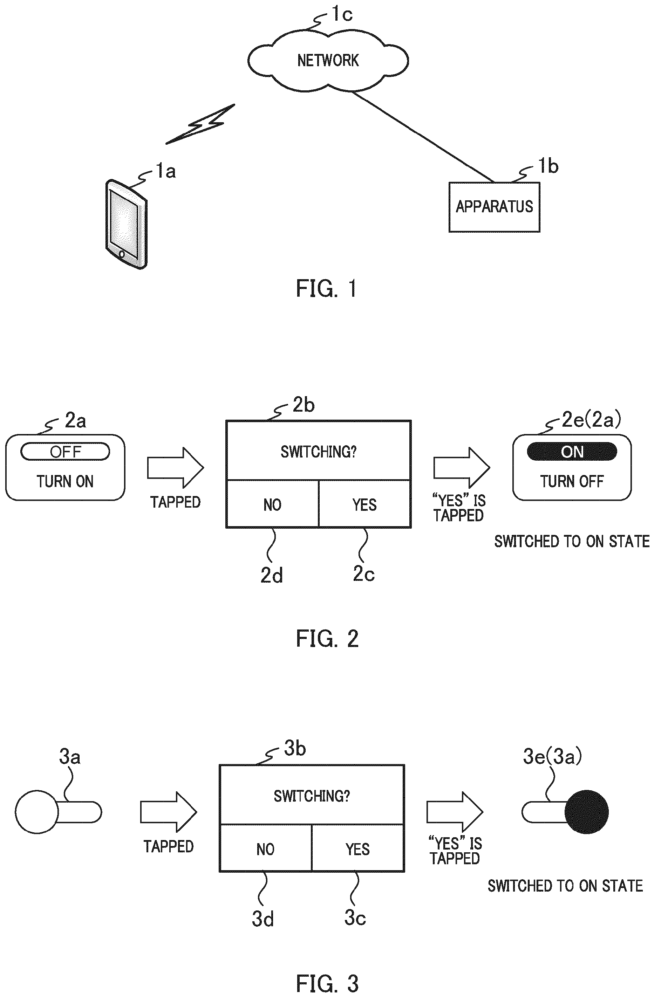

FIG. 1 illustrates a system configuration example including terminal 1a according to Embodiment 1. FIG. 1 illustrates terminal 1a, apparatus 1b, and network 1c.

For example, terminal 1a is a terminal such as a smartphone, a tablet terminal, a laptop personal computer, or a desktop personal computer. Terminal 1a may be referred to as an information processing apparatus.

Terminal 1a includes a touch panel. Terminal 1a receives a user operation via the touch panel.

Terminal 1a communicates with apparatus 1b via network 1c such as wireless network and/or wired network. For example, apparatus 1b may be an apparatus controlled by terminal 1a. Specifically, apparatus 1b may be an electrical lock apparatus attached to a door or an air conditioning apparatus installed indoor.

Terminal 1a controls apparatus 1b in response to the operation of the user. For example, terminal 1a unlocks and locks the electrical lock of an electrical lock apparatus or turns an air conditioning apparatus on and off.

Terminal 1a controls apparatus 1a in response to the operation of the user. For example, terminal 1a deletes an application stored in terminal 1a or turns off the power of terminal 1a in response to the operation of the user.

### <Two Operations>

Some terminals require two operations to prevent erroneous operations by the user. For example, important operations such as unlocking and locking of an electrical lock and turning on and off of an air conditioning apparatus require two operations. For example, important operations such as deletion of an application stored in a terminal and turning off the power of the terminal require two operations.

FIG. 2 illustrates Example 1 of the two operations. For example, as illustrated in FIG. 2, the terminal displays on the display button image 2a for turning on and off a certain function of the terminal. Button image 2a includes a text image "OFF" indicating that a certain function is in an off state and a text image "Turn ON" indicating that button image 2a is a button for turning on the certain function.

When button image 2a is tapped (first operation), the terminal displays on the display confirmation image 2b for confirming whether to switch the certain function, button image 2c including the text "Yes", and button image 2d including the text "No".

When button image 2c displaying "Yes" is tapped (second operation), the terminal switches the text image of "OFF" included in button image 2a to "ON" and switches the text image of "Turn ON" to "Turn OFF", as illustrated in button image 2e.

When button image 2d displaying "No" is tapped (second operation), the terminal returns to the display screen of button image 2a.

As described above, the terminal prevents an erroneous operation by causing a user to perform two operations.

FIG. 3 illustrates Example 2 of the two operations. For example, as illustrated in FIG. 3, the terminal displays on the display toggle image 3a for turning on and off a certain function of the terminal.

When toggle image 3a is tapped or slid (first operation), the terminal displays on the display confirmation image 3b for confirming whether to switch the certain function, button image 3c including the text "Yes", and button image 3d including the text "No".

When button image 3c displaying "Yes" is tapped (second operation), the terminal switches the position and the color of the toggle displayed in toggle image 3a, as illustrated in toggle image 3e.

When button image 3d displaying "No" is tapped (second operation), the terminal returns to the display screen of toggle image 3a.

As described above, the terminal prevents an erroneous operation by causing a user to perform two operations.

Tapping (also tap or tapped) may mean, for example, touching and then immediately releasing a display (image). That is, tapping may mean contacting the display for a period of time shorter than touching. Touching (also touch or touched) may include a state in which the display is kept contacted.

### < Analysis>

For example, when a user is accustomed to operating a terminal and wants to operate the terminal quickly, the user may find the display and operation of a guidance image for confirming the wanted operation (operation confirmation) to be bothersome.

For example, the user may find the display of confirmation image 2b in FIG. 2 and tap operations of button images 2c and 2d for operation confirmation to be bothersome. For example, the user may find the display of confirmation image 3b in FIG. 3 and tap operations of button images 3c and 3d for operation confirmation to be bothersome.

Accordingly, terminal 1a provides a user with an operation that prevents an erroneous operation and makes the user feel less bothered by the operation.

### <Operation 1>

When terminal 1a receives a slide operation from a user via the touch panel and receives a hold operation for a certain period of time without a finger of the user being released from the touch panel (display) after the slide operation, terminal 1a receives an operation for a specific process.

For example, the specific process may be the control of apparatus 1b, such as unlocking and locking of an electrical lock and turning on and off of an air conditioning apparatus. Further, for example, the specific process may be a process in terminal 1a, such as a deletion of an application stored in terminal 1a and turning off the power of terminal 1a.

Hereinafter, an electrical lock apparatus will be described as apparatus 1b, and the control (unlocking and locking) of apparatus 1b will be described as the specific process to facilitate understanding.

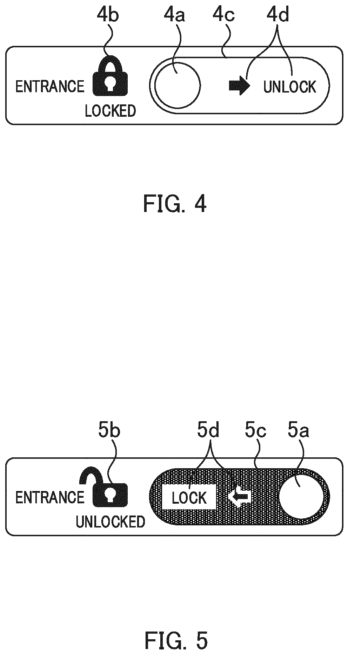

FIG. 4 is a diagram for describing Operation 1. Apparatus 1b is assumed to be locked.

As illustrated in FIG. 4, terminal 1a displays button image 4a and movable region image 4c indicating a movable region (movable range) of button image 4a on the display. Further, terminal 1a displays on the display icon image 4b indicating that apparatus 1b is locked and guidance image 4d indicating that it is possible to unlock apparatus 1b when button image 4a is slid in the right direction.

For unlocking apparatus 1b using terminal 1a, the user touches button image 4a. For example, the user slides button image 4a in the right direction while touching button image 4a, in accordance with guidance image 4d. After the user slides button image 4a to the opposite end position (right end) of movable region image 4c of button image 4a, the user holds a finger on button image 4a for a certain period of time without releasing the finger from button image 4a. For example, the user does not move the finger while touching button image 4a, and holds the state for one second.

When button image 4a is slid in the right direction and the hold operation continues for a certain period of time, terminal 1a receives an operation for the unlocking process (specific process) of apparatus 1b. That is, terminal 1a determines that the operation of apparatus 1b for the unlocking process is performed by the slide operation of button image 4a and the hold operation for a certain period of time.

FIG. 5 is a diagram for describing Operation 1. After receiving the slide operation and the hold operation for a certain period of time, as illustrated in FIG. 5, terminal 1a displays on the display button image 5a after the slide movement and icon image 5b indicating that apparatus 1b is unlocked. Further, terminal 1a changes the color and/or pattern of movable region image 5c of button image 5a. Further, terminal 1a displays on the display guidance image 5d indicating that it is possible to lock apparatus 1b when button image 5a is slid in the left direction.

For example, the user can recognize that terminal 1a has received the unlocking operation when icon image 4b (see FIG. 4) indicating that apparatus 1b is locked is changed to icon image 5b (see FIG. 5) indicating that apparatus 1b is unlocked. Further, for example, the user can recognize that terminal 1a has received the unlocking operation when a text image indicating "Locked" displayed on the lower portion of icon image 4b (see FIG. 4) is changed to a text image indicating "Unlocked" displayed on the lower portion of icon image 5b (see FIG. 5). Further, the user can recognize that terminal 1a has received the unlocking operation when the movable region image 5c of button image 5a is changed to have a specific color and/or pattern. When the user recognizes that terminal 1a has received the unlocking operation, the user can release the finger from button image 5a.

By the operation of terminal 1a described above, a user feels less bothered by the operation of terminal 1a. For example, in the operation of terminal 1a described above, an image of operation confirmation for the user is not displayed and a tap operation for operation confirmation is not necessary, and therefore the user feels less bothered by the operation of terminal 1a.

Further, by combining the slide operation and the hold operation, an erroneous operation that would be caused by the user is prevented. For example, unless a hold operation is performed for a certain period of time, terminal 1a does not receive the unlocking operation of apparatus 1b even when the user taps or slides button image 4a illustrated in FIG. 4 by mistake (for example, unintentionally). Thus, an erroneous operation that would be caused by the user is prevented.

In the above description, while the user is notified that terminal 1a has received the unlocking operation by the change in the movable region image 5c of button image 5a and the change in icon image 5b, for example, the user may be notified that terminal 1a has received the unlocking operation by vibration and sound. The button image may be referred to as a knob image or a toggle image.

While the unlocking operation of apparatus 1b has been described above, terminal 1a may execute a reception operation also in the locking operation by sliding and holding. For example, when button image 5a illustrated in FIG. 5 is slid in the left direction and is held for a certain period of time, terminal 1a may receive the locking operation.

Hereinafter, the reception operation by sliding and holding may be referred to as a slide and hold operation.

### <Operation 2>

Terminal 1a changes the icon image, changes the color and/or pattern of the image in the movable region of the button image, and displays the operation guidance image such that the user can intuitively understand the slide and hold operation.

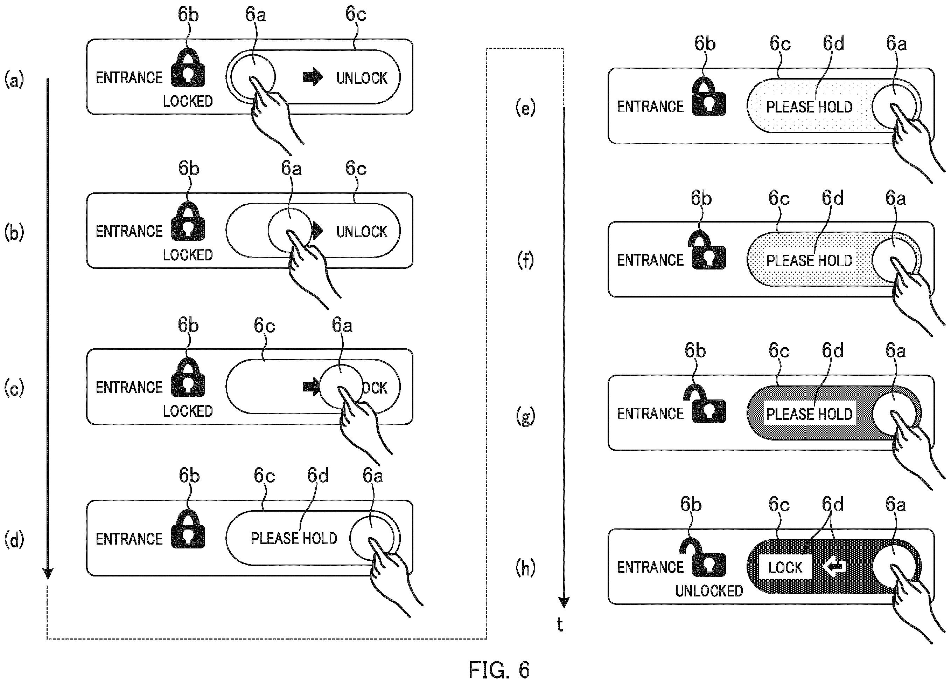

FIG. 6 is a diagram for describing Operation 2. In FIG. 6, (a) to (h) illustrate screen transitions of the screen displayed on the display of terminal 1a. In FIG. 6, t indicates the time axis, and the screen transitions in the order of (a), (b) ... (h). At the time of (a) in FIG. 6, apparatus 1b is assumed to be locked.

The image illustrated at (a) in FIG. 6 is the same as the image illustrated in FIG. 4. The image illustrated at (h) in FIG. 6 is the same as the image illustrated in FIG. 5.

At (a) in FIG. 6, button image 6a is located at the edge position (left end) of movable region image 6c indicating a movable region (slide range) of button image 6a. As illustrated at (a) in FIG. 6, the user touches button image 6a.

As illustrated at (b) and (c) in FIG. 6, the user slides button image 6a in the right direction along movable region image 6c without releasing the finger from the display. While the user is performing the slide operation, terminal 1a displays locked icon image 6b on the display.

As illustrated at (d) in FIG. 6, the user slides button image 6a to the opposite end position (right end) of the movable region for button image 6a. When button image 6a is moved to the opposite end position of the movable region, for example, terminal 1a displays, in movable region image 6c for button image 6a, guidance image 6d that guides the hold operation of button image 6a with the text indicating "Please hold". Further, terminal 1a erases the state display image indicating "Locked" that represents the state of apparatus 1b.

As illustrated at (e) to (g) in FIG. 6, the user performs a hold operation on button image 6a for a certain period of time without releasing the finger after the slide operation. While the user is performing the hold operation, terminal 1a causes the colors and/or patterns of icon image 6b and movable region image 6c to change with the elapse of time.

For example, as icon images 6b illustrated at (e) to (g) in FIG. 6, terminal 1a displays a process of unlocking the locked key on the display. Further, as movable region images 6c illustrated at (e) to (g) in FIG. 6, terminal 1a causes the color of the movable region for button image 6a to change gradually (for example, change gradually from green to red).

When a certain period of time elapses after the hold operation on button image 6a, terminal 1a displays icon image 6b indicating the unlocked state on the display as illustrated at (h) in FIG. 6, and displays a state display image such as "Unlocked" indicating the state of apparatus 1b on the lower portion of icon image 6b. Further, terminal 1a changes the color and/or pattern of movable region image 6c for button image 6a and displays, in the movable region image 6c, guidance image 6d indicating that apparatus 1b can be locked when button image 6a is slid in the left direction.

By the operation of terminal 1a described above, the user can intuitively understand the slide and hold operation. For example, as illustrated at (d) in FIG. 6, when button image 6a is slid to the opposite end position (right end) of the movable region, terminal 1a displays guidance image 6d that guides a hold operation indicating "Please hold". Thus, the user can intuitively understand the slide and hold operation. Further, as illustrated at (e) to (h) in FIG. 6, after the hold operation is started, terminal 1a gradually changes icon image 6b and gradually changes the color and/or pattern of movable region image 6c for button image 6a. Thus, the user can intuitively understand the slide and hold operation.

While the unlocking operation in apparatus 1b has been described above, terminal 1a may change the icon image, change the color and/or pattern of the image in the movable region of the button image, and display the operation guidance image also in the locking operation in the same manner as described above.

### <Operation 3>

When the UI for the slide and hold operation is tapped, terminal 1a displays a confirmation image for confirming the user whether to switch from locking to unlocking. Further, in a case where the time period for the hold operation after the slide operation has not reached a certain period of time, terminal 1a displays a confirmation image for confirming the user whether to switch from locking to unlocking.

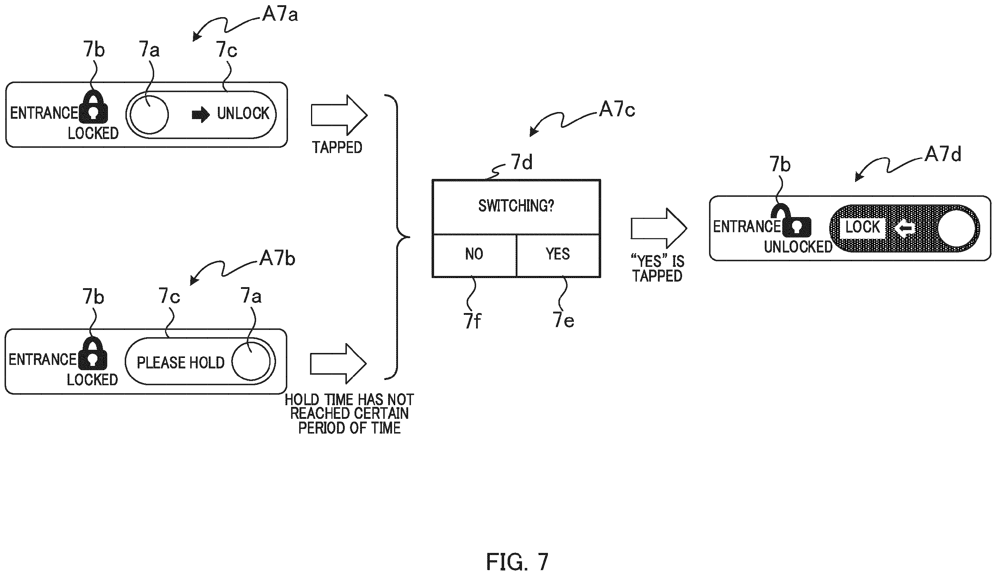

FIG. 7 is a diagram for describing Operation 3. When a UI for the slide and hold operation such as button image 7a, icon image 7b, or movable region image 7c for button image 7a is tapped as indicated by arrow A7a in FIG. 7, terminal 1a displays on the display confirmation image 7d for confirming the user whether to switch from locking to unlocking, button image 7e including the text "Yes", and button image 7f including the text "No", as indicated by arrow A7c in FIG. 7.

Further, when the hold time has not reached a certain period of time (when, after the slide operation, the user releases the finger from button image 7a before a certain period of time elapses) as indicated by arrow A7b in FIG. 7, terminal 1a displays on the display confirmation image 7d for confirming the user whether to switch from locking to unlocking, button image 7e including the text "Yes", and button image 7f including the text "No", as indicated by arrow A7c in FIG. 7.

When button image 7e displaying "Yes" is tapped, terminal 1a displays the same image as in a case where the slide and hold operation is performed (see FIG. 5 or (h) in FIG. 6) on the display, as indicated by arrow A7d in FIG. 7. That is, terminal 1a receives the unlocking operation of apparatus 1b.

When button image 7f displaying "No" is tapped, terminal 1a returns to the original UI image as indicated by arrow A7a in FIG. 7. That is, terminal 1a does not receive the unlocking operation of apparatus 1b.

By the operation of terminal 1a described above, terminal 1a can provide control of apparatus 1b even to a user who does not understand the slide and hold operation. Further, for example, an erroneous operation due to operations unintended by the user is prevented.

The case where the time period for the hold operation after the slide operation has not reached a certain period of time includes a case where button image 7a is slid to the opposite end position (right end of the movable region), but the user releases the finger without holding.

### <Operation 4>

When a user releases the finger from the button image in the middle of the slide operation, terminal 1a returns the button image to the original position.

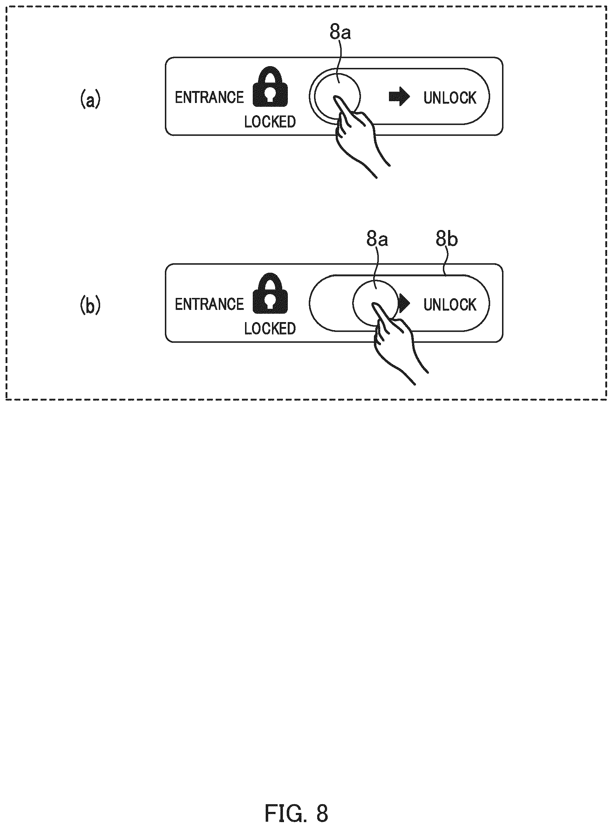

FIG. 8 is a diagram for describing Operation 4. The user touches button image 8a as illustrated at (a) in FIG. 8, and slides button image 8a to the opposite end position (right end) of movable region image 8b as illustrated at (b) in FIG. 8.

When the user releases the finger from button image 8a in the middle of the slide operation (before button image 8a reaches the opposite end position (right end)), terminal 1a returns button image 8a to the original position (edge position on the left end) as illustrated at (a) in FIG. 8. In this case, terminal 1a does not receive the unlocking operation of apparatus 1b.

For example, by the operation of terminal 1a described above, an erroneous operation due to operations unintended by the user is prevented.

### <Block Configuration>

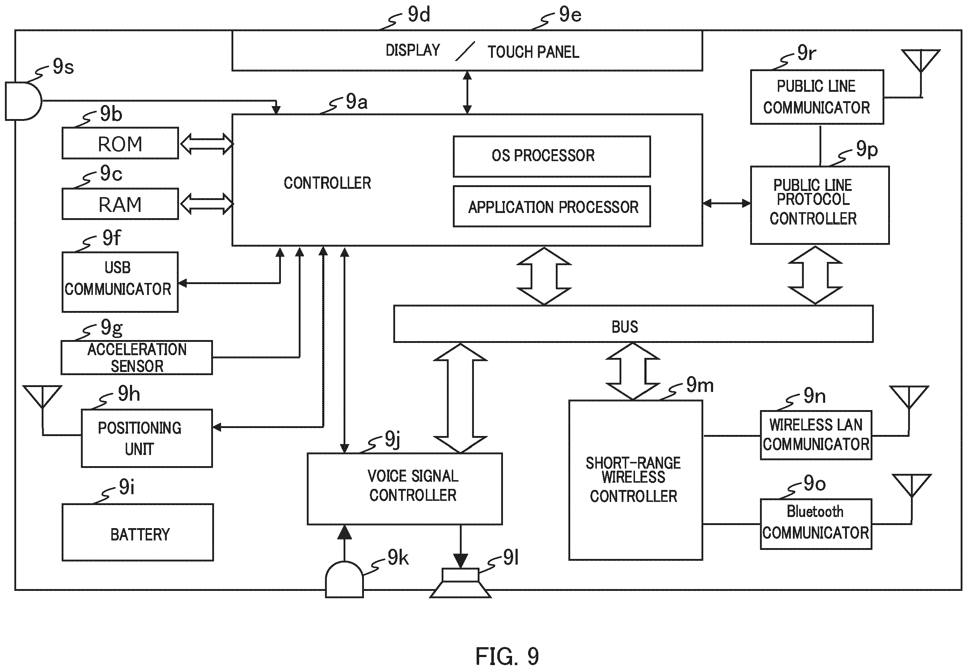

FIG. 9 illustrates a block configuration example of terminal 1a. As illustrated in FIG. 9, terminal 1a includes controller 9a, read only memory (ROM) 9b, random access memory (RAM) 9c, display 9d, touch panel 9e, universal serial bus (USB) communicator 9f, acceleration sensor 9g, positioning unit 9h, battery 9i, voice signal controller 9j, microphone 9k, speaker 9l, short-range wireless controller 9m, wireless local area network (LAN) communicator 9n, Bluetooth (registered trademark) communicator 9o, public line protocol controller 9p, public line communicator 9r, and camera 9s.

Controller 9a controls the entire terminal 1a. Controller 9a may be configured by, for example, a central processing unit (CPU). Controller 9a may have functions of an operating system (OS) processor and an application processor by executing a program. The functions of the slide and hold operation may be realized by, for example, the application processor.

ROM 9b stores an OS program, an application program, and data for the operation of controller 9a. RAM 9c is used as a working memory of controller 9a. A program and data stored in ROM 9b are loaded in RAM 9c.

Display 9d displays an image in response to control by controller 9a. Touch panel 9e receives the operation of a user and outputs a signal to controller 9a in response to the user operation.

USB communicator 9f performs serial communication. Acceleration sensor 9g measures acceleration. Positioning unit 9h detects the position of terminal 1a using, for example, a global positioning system (GPS) signal. Battery 9i supplies power to each part. Voice signal controller 9j converts an analog voice signal from microphone 9k into a digital signal, and outputs the digital signal to controller 9a. Voice signal controller 9j converts a digital voice signal from controller 9a into an analog signal, and outputs the analog signal to speaker 9l.

Short-range wireless controller 9m controls wireless communication of a wireless LAN and Bluetooth. Wireless LAN communicator 9n performs wireless LAN communication based on control by short-range wireless controller 9m. Bluetooth communicator 9o performs Bluetooth communication based on control by short-range wireless controller 9m.

Public line protocol controller 9p controls a protocol of a mobile phone system such as 5G or 4G. Public line communicator 9r performs public line communication based on control by public line protocol controller 9p.

Camera 9s captures an image of a subject based on control by controller 9a, and outputs the captured subject image data to controller 9a.

### <Operation Flow>

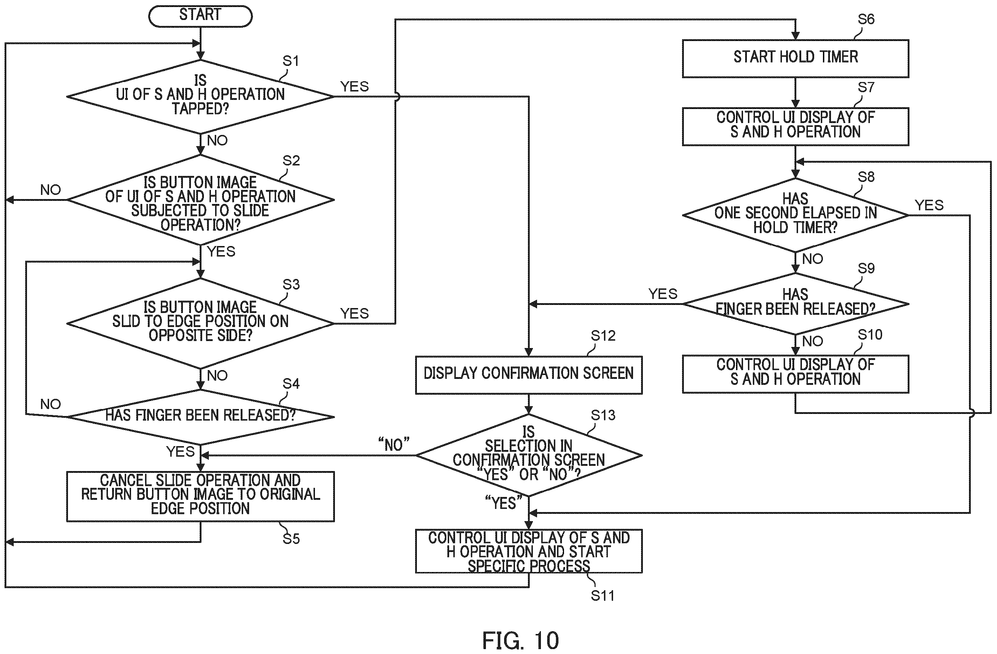

FIG. 10 is a flowchart illustrating an operation example in the slide and hold operation of terminal 1a.

Terminal 1a determines whether the UI for the slide and hold (S and H) operation is tapped (S1). For example, terminal 1a determines whether an image related to the slide and hold operation, such as button image 4a, icon image 4b, or movable region image 4c illustrated in FIG. 4, is tapped.

When it is determined in S1 that the UI for the slide and hold operation is not tapped (NO in S1), terminal 1a determines whether the button image of the UI for the slide and hold operation is subjected to a slide operation (S2).

When it is determined in S2 that the button image of the UI for the slide and hold operation is not subjected to the slide operation (NO in S2), terminal 1a transitions the process to S1.

On the other hand, when it is determined in S2 that the button image of the UI for the slide and hold operation is subjected to the slide operation (YES in S2), terminal 1a determines whether the button image is slid from the current edge position in the movable region to the edge position on the opposite side (S3).

When it is determined in S3 that the button image is not slid from the current edge position in the movable region to the edge position on the opposite side (NO in S3), terminal 1a determines whether the user has released the finger from the button image (S4).

When it is determined in S4 that the user has not released the finger from the button image (NO in S4), terminal 1a transitions the process to S3.

On the other hand, when it is determined in S4 that the user has released the finger from the button image (YES in S4), terminal 1a cancels the slide operation, and returns the button image to the original edge position (S5). That is, when the slide operation is not sufficient, terminal 1a returns the button image to the original edge position and returns to the original UI image. After the process in S5, terminal 1a transitions the process to S1.

When it is determined in S3 that the button image has been slid from the current edge position in the movable region to the edge position on the opposite side (YES in S3), terminal 1a starts a hold timer (S6).

Terminal 1a controls the UI display in the slide and hold operation (S7). For example, as described at (d) in FIG. 6, terminal 1a erases the state display image indicating "Locked" displayed on the lower portion of icon image 6b, and displays guidance image 6d indicating "Please hold". That is, terminal 1a displays on the display an image for causing the user to perform a hold operation.

Terminal 1a determines whether one second has elapsed in the hold timer (S8). The time of the hold timer is not limited to one second.

When it is determined in S8 that one second has not elapsed in the hold timer (NO in S8), terminal 1a determines whether the user has released the finger from the touch panel (display) (S9).

When it is determined in S9 that the user has not released the finger from the touch panel (NO in S9), terminal 1a controls the UI display in the slide and hold operation (S10). For example, as described at (e) to (g) in FIG. 6, terminal 1a gradually changes the colors and/or patterns of icon image 6b and movable region image 6c. Then, terminal 1a transitions the process to S8. That is, terminal 1a displays on the display an image indicating the process of completing the receiving of the user operation.

When it is determined in S8 that one second has elapsed in the hold timer (YES in S8), terminal 1a controls the UI display in the slide and hold operation and executes (starts) a specific process (S11). For example, as described at (h) in FIG. 6, terminal 1a displays on the display icon image 6b indicating the unlocked state, and displays on the display a state display image such as "Unlocked" indicating the state of apparatus 1b on the lower portion of icon image 6b. Further, for example, as described at (h) in FIG. 6, terminal 1a changes the color and/or pattern of movable region image 6c for button image 6a and displays, in the movable region image 6c, guidance image 6d indicating that apparatus 1b can be locked when button image 6a is slid in the left direction. After the process in S11, terminal 1a transitions the process to S1.

That is, terminal 1a determines that a user operation for a specific process (switching process of unlocking and locking of apparatus 1b) is performed through a slide operation and a hold operation for a certain period of time by the user, and executes the specific process.

When it is determined in S1 that the UI for the slide and hold operation is tapped (YES in S1), or when it is determined in S9 that the user has released the finger from the touch panel (YES in S9), terminal 1a displays the confirmation screen on the display (S12). For example, as described in FIG. 7, terminal 1a displays confirmation screen 7d on the display.

That is, for example, when a user taps the UI for the slide and hold operation without knowing that the user can switch between locking and unlocking by the slide and hold operation, or when a user taps the UI for the slide and hold operation by mistake (for example, unintentionally), terminal 1a displays a confirmation screen on the display. Further, when the hold operation is not sufficient, terminal 1a determines that the user operation for the switching process of unlocking and locking of apparatus 1b is not completed, and displays a confirmation image on the display.

Terminal 1a determines which of "Yes" or "No" the user selects in the confirmation screen (S13).

When it is determined in S13 that "Yes" is selected ("Yes" in S13), terminal 1a transitions the process to S11. That is, when terminal 1a has received an operation of executing the specific process (the switching process of unlocking and locking of apparatus 1b) in the confirmation screen, terminal 1a transitions the process to S11.

On the other hand, when it is determined in S13 that "No" is selected ("No" in S13), terminal 1a transitions the process to S5. That is, when terminal 1a has not received an operation of executing the specific process (the switching process of unlocking and locking of apparatus 1b) in the confirmation screen, terminal 1a transitions the process to S5.

### <Summary of Present Disclosure>

Terminal 1a receives a slide operation of a button image displayed on a display from a first position to a second position (for example, from one end to the other end of the movable region of the button image) and when a finger is held in the second position without being released from the display for a certain period of time, terminal 1 receives an operation for an unlocking and locking process of apparatus 1b. Thus, terminal 1a can prevent an erroneous operation and to make the user feel less bothered by the operation.

### <Modification Example>

In the above description, terminal 1a determines whether an operation for a specific process has been performed in response to the slide and hold operation, but the present disclosure is not limited to this. Terminal 1a may determine whether an operation for a specific process has been performed in response to a hold and slide operation. For example, when the hold operation is performed without the finger being released from the touch panel for a certain period of time and then the slide operation is performed, terminal 1a may determine that an operation for a specific process has been performed.

Although the embodiments have been described above with reference to the drawings, the present disclosure is not limited to such examples. It is clear that a person skilled in the art is capable of conceiving various changes and modifications within the scope of the claims. It is understood that such changes or modifications also fall within the technical scope of the present disclosure. Further, the component elements in the embodiments may be arbitrarily combined without departing from the spirit of the present disclosure.

In the above-described embodiments, the expressions "processor," "-er," "-or," and "-ar" used for the component elements may be replaced with other expressions such as "circuit (circuitry)," "assembly," "device," "unit," or "module."

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

### Industrial Applicability

For example, the present disclosure is useful for a technology for receiving a user operation in a terminal such as a smartphone.

### Reference Signs List

1a Terminal
1b Apparatus
1c Network

## Claims

1. An operation method comprising:
receiving, by a terminal (1a), a slide operation of an image displayed on a display (9d) from a first position to a second position; and
receiving, by the terminal (1a), an operation for a specific process when a finger is held in the second position without being released from the display (9d) for a certain period of time.

2. The operation method according to claim 1, wherein
when an image related to the slide operation and a hold operation is tapped, a confirmation image that inquires whether to execute the specific process is displayed.

3. The operation method according to claim 1, wherein
when the finger is released from the display (9d) before the image is slid to the second position, the image returns to the first position.

4. The operation method according to claim 1, wherein
when the finger is released from the display (9d) before the certain period of time elapses, a confirmation image that inquires whether to execute the specific process is displayed.

5. The operation method according to claim 1, wherein
after the image is slid to the second position, a guidance image for a user to perform a hold operation is displayed until the certain period of time elapses.

6. The operation method according to claim 1, wherein
after the image is slid to the second position, an image indicating a process of completing the receiving of the operation for the specific process is displayed until the certain period of time elapses.

7. A recording medium storing thereon a program for causing a terminal (1a) to execute processing, the processing comprising:
receiving a slide operation of an image displayed on a display (9d) from a first position to a second position; and
receiving an operation for a specific process when a finger is held in the second position without being released from the display (9d) for a certain period of time.

8. A terminal (1a) comprising:
a slide operation receiver that receives a slide operation of an image displayed on a display (9d) from a first position to a second position; and
a hold operation receiver that receives an operation for a specific process when a finger is held in the second position without being released from the display (9d) for a certain period of time.
